(19) Europäisches Patentamt
European Patent Office
Office européen des brevets

(11) **EP 4 071 121 A1**

(12) **EUROPEAN PATENT APPLICATION**
published in accordance with Art. 153(4) EPC

(43) Date of publication:
**12.10.2022 Bulletin 2022/41**

(21) Application number: **20896663.0**

(22) Date of filing: **27.11.2020**

(51) International Patent Classification (IPC):
**C03C 27/12** (2006.01)    **B32B 17/10** (2006.01)
**B60J 1/00** (2006.01)

(52) Cooperative Patent Classification (CPC):
**B32B 17/00; B32B 17/10; B60J 1/00**

(86) International application number:
**PCT/JP2020/044222**

(87) International publication number:
**WO 2021/112003 (10.06.2021 Gazette 2021/23)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **04.12.2019 JP 2019219979**

(71) Applicant: **NIPPON SHEET GLASS COMPANY, LIMITED**
**Tokyo 108-6321 (JP)**

(72) Inventors:
• **OGAWA, Ryohei**
**Tokyo 108-6321 (JP)**
• **OGAWA, Hisashi**
**Tokyo 108-6321 (JP)**
• **ASAOKA, Hisashi**
**Tokyo 108-6321 (JP)**

(74) Representative: **Mewburn Ellis LLP**
**Aurora Building**
**Counterslip**
**Bristol BS1 6BX (GB)**

(54) **VEHICULAR LAMINATED GLASS**

(57)    A automobile laminated glass according to the present invention includes: a curved outer glass plate; a curved inner panel that is smaller than the outer glass plate and is disposed opposing the outer glass plate; and an intermediate film that includes a functional layer and is disposed between the outer glass plate and the inner panel, wherein at least a portion of the inner panel is located inward of a peripheral edge of the outer glass plate.

Fig. 1

**Description**

Technical Field

The present invention relates to an automobile laminated glass.

Background Art

Forming automobile glass panels other than windshields, such as side glass panels, using laminated glass has been proposed in recent years (for example, Patent Literature 1).

Citation List

Patent Literature

Patent Literature 1: JP 2017-65966A

Summary of Invention

Technical Problem

However, laminated glass uses two curved glass plates, and thus there is concern that wrinkles will form in an interposed intermediate film or that air will be trapped and bubbles will form when laminating these glass plates. Also, such issues may occur when at least one curved resin panel is used and not just when two glass plates are used, for example. The present invention has been made in order to resolve the above-described problems, and aims to provide an automobile laminated glass that, in a case where two curved glass plates or panels are used, can suppress the formation of wrinkles in an interposed intermediate film and the trapping of bubbles.

Solution to Problem

Item 1. An automobile laminated glass including:

a curved outer glass plate;
a curved inner panel that is smaller than the outer glass plate and is disposed opposing the outer glass plate; and
an intermediate film that includes a functional layer and is disposed between the outer glass plate and the inner panel, wherein at least a portion of the inner panel is located inward of a peripheral edge of the outer glass plate.

Item 2. The automobile laminated glass according to Item 1, wherein when a horizontal curvature radius of an opposing region of the outer glass plate where the outer glass plate opposes the inner glass plate is defined as Rx (mm), and a vertical curvature radius of the outer glass plate is defined as Ry (mm), and $1/Rx*1/Ry*10^{-6}$ is defined as a curvature index, the curvature index is 2.4 or less.

Item 3. The automobile laminated glass according to Item 2, wherein the curvature index in the opposing region is 1.3 or less.

Item 4. The automobile laminated glass according to Item 2 or 3,

wherein Rx is 200 to 200,000 mm, and
Ry is 1,700 to 5,000 mm.

Item 5. The automobile laminated glass according to any of Items 1 to 4, including at least one protruding portion curved to an outer side of a vehicle when the automobile laminated glass is attached to the vehicle.

Item 6. The automobile laminated glass according to any of Items 1 to 5, wherein the functional layer is a dimming film.

Item 7. The automobile laminated glass according to Item 6, wherein the dimming film is a PDLC-type or SPD-type film.

Item 8. The automobile laminated glass according to Item 6 or 7, wherein a terminal for applying a voltage to the dimming film is disposed in a lower end portion of the inner glass plate.

Item 9. The automobile laminated glass according to any of Items 1 to 8,

wherein the intermediate film is formed by a plurality of sheet members, and
the plurality of sheet members are arranged spaced apart from each other.

Item 10. The automobile laminated glass according to any Items 1 to 9,
wherein the inner panel is formed by a glass plate.
Item 11. The automobile laminated glass according to any of Items 1 to 10,

wherein the outer glass plate includes a window region that allows passage of light from outside a vehicle, and a blocking region in which a blocking layer is laminated surrounding the window region so as to block the passage of light from outside the vehicle, and
the inner panel is attached so as to cover the window region.

Item 12. The automated laminated glass according to any of Items 1 to 11,
wherein the automated laminated glass is a rear glass panel, a rear quarter glass panel, or a side glass panel.
Item 13. The automated laminated glass according to any of Items 1 to 12,

wherein the outer glass plate has a thickness of 1.6 mm to 4 mm, and
the inner panel has a thickness of 0.3 to 2.3 mm.

Item 14. The automobile laminated glass according to any of Items 1 to 13,

wherein the intermediate film includes a pair of the adhesion layers, and
the functional layer is disposed between the pair of adhesion layers.

Advantageous Effects of Invention

With the laminated glass according to the preset invention, weight can be reduced.

Brief Description of Drawings

FIG. 1 is a plan view showing an embodiment in which an automobile laminated glass according to the present invention is applied to a rear glass panel.
FIG. 2 is a cross-sectional view of FIG. 1.
FIG. 3 is a plan view showing another example of the rear glass panel shown in FIG. 1.
FIG. 4 is a plan view showing another example of the rear glass panel shown in FIG. 1.
FIG. 5 is a plan view showing an example in which an automobile laminated glass according to present invention is applied to a side glass panel.
FIG. 6 is a cross-sectional view taken along line A-A in FIG. 5.
FIG. 7 is a diagram showing an Rx distribution in an outer glass plate of a rear glass panel according to an Example.
FIG. 8 is a diagram showing a distribution of a curvature index of an outer glass plate of a rear glass panel according to an Example.
FIG. 9 is a diagram showing a distribution of a curvature index of an outer glass plate of a side glass panel according to an Example.

Description of Embodiments

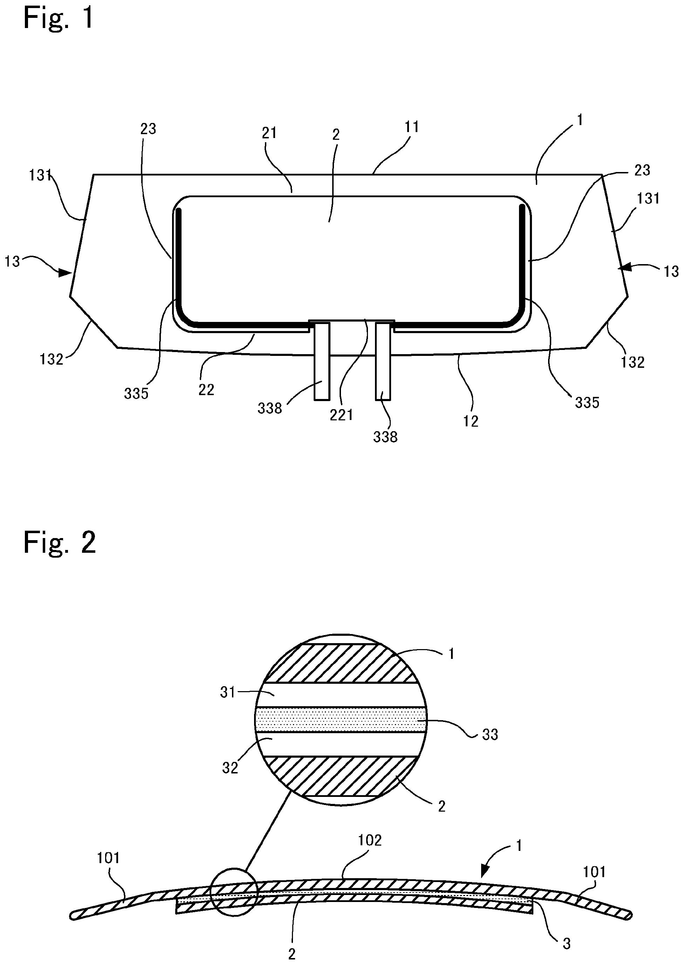

Below, an embodiment in a case where an automobile laminated glass of the present invention is applied to a rear glass panel will be described with reference to the drawings. FIG. 1 is a plan view of a rear glass panel according to the present embodiment, and FIG. 2 is a cross-sectional view of FIG. 1. For convenience of description, the vertical direction in FIG. 1 may be referred to as a "top-bottom", "vertical", or "longitudinal" direction, and the horizontal direction in FIG. 1 may be referred to as a "left-right" direction.
As shown in FIG. 1, the rear glass panel according to the present embodiment includes a rectangular outer glass plate 1, an inner glass plate 2 disposed opposing the inner-vehicle surface of the outer glass plate 1, and an intermediate film 3 disposed between the outer glass plate 1 and the inner glass plate 2. The constituent elements are described below.

<1. Outer Glass Plate>

The outer glass plate 1 can be a known glass plate, and can also be formed using heat absorbing glass, ordinary clear glass or green glass, or UV green glass. However, the outer glass plate 1 needs to achieve visible light transmittance conforming to the safety standards in the country in which an automobile is used. For example, adjustments can be made so that a required solar absorptivity is ensured by the outer glass plate 1, and the visible light transmittance satisfies the safety standards with the inner glass plate 2. Examples of clear glass, heat absorbing glass, and soda-lime glass are listed below.

Clear Glass

$SiO_2$: 70 to 73 mass%
$Al_2O_3$: 0.6 to 2.4 mass%
CaO: 7 to 12 mass%
MgO: 1.0 to 4.5 mass%
$R_2O$: 13 to 15 mass% (R denotes alkali metal)
Total iron oxide (T-$Fe_2O_3$) expressed in terms of $Fe_2O_3$: 0.08 to 0.14 mass%

Heat Absorbing Glass

The composition of heat absorbing glass can be, for example, a composition that is based on the composition of clear glass, where the proportion of total iron oxide (T-$Fe_2O_3$) expressed in terms of $Fe_2O_3$ is 0.4 to 1.3 mass%, the proportion of $CeO_2$ is 0 to 2 mass%, the proportion of $TiO_2$ is 0 to 0.5 mass%, and the skeletal component (primarily, $SiO_2$ and $Al_2O_3$) of glass is reduced by the increased amount of T-$Fe_2O_3$, $CeO_2$, and $TiO_2$.

Soda-lime Glass

$SiO_2$: 65 to 80 mass%
$Al_2O_3$: 0 to 5 mass%
CaO: 5 to 15 mass%
MgO: 2 mass% or more
NaO: 10 to 18 mass%
$K_2O$: 0 to 5 mass%
MgO+CaO: 5 to 15 mass%
$Na_2O$+$K_2O$: 10 to 20 mass%
$SO_3$: 0.05 to 0.3 mass%
$B_2O_3$: 0 to 5 mass%
Total iron oxide (T-$Fe_2O_3$) expressed in terms of $Fe_2O_3$: 0.02 to 0.03 mass%

As shown in FIG. 1, the outer glass plate 1 has a substantially rectangular shape that has an upper side 11, a lower side 12, and a pair of lateral sides 13. The lateral sides 13 are each constituted by a first portion 131 that extends downward from a corresponding end of the upper side 11 toward one side, and a second portion 132 that obliquely extends downward from the lower end of the corresponding first portion 131 toward the center in the left-right direction of the outer glass plate 1. The lower side 12 extends substantially horizontally so as to connect the lower ends of the two second portions 132 to each other. Also, the lower side 12 is formed to be somewhat shorter than the upper side 11.

As shown in FIG. 2, the outer glass plate 1 includes a pair of lateral regions 101 that are respectively located outward of the two ends of the lower side 12 in the horizontal direction, and a central region 102 that is arranged between the lateral regions 101. The central region 102 is three-dimensionally curved in the vertical direction and the horizontal direction so as to protrude toward the outer side of the vehicle. Also, while the lateral regions 101 are also similarly three-dimensionally curved in the vertical direction and the horizontal direction, in particular the curvature radii in the horizontal direction thereof are smaller than that of the central region 102.

The outer glass plate 1 principally needs durability and shock resistance against an external obstacle. When used as an automobile windshield, the outer glass plate 1 needs shock resistance against a flying object, such as a small stone. Meanwhile, the larger the thickness is, the heavier the weight is, which is not favorable. From this viewpoint, the thickness of the outer glass plate 1 preferably is 1.6 mm to 4.0 mm, more preferably is 1.8 mm to 2.8 mm, and is particularly preferably 1.8 mm to 2.3 mm. The thickness to be employed can be determined in accordance with the usage of the glass.

<2. Inner Glass Plate>

The inner glass plate 2 has a rectangular shape that is smaller than the outer glass plate 1, and is disposed so as to oppose the inner surface of the central region 102 of the outer glass plate 1. More specifically, the inner glass plate 2 has an upper side 21, a lower side 22, and a pair of lateral sides 23, and the four corner portions thereof are arc-shaped. Also, a rectangular cut-out 231 is formed in the lower side 23.

As shown in FIG. 2, the inner glass plate 2 is curved so as to match the central region 102 of the outer glass plate 1. In other words, the outer surface of the inner glass plate 2 and the inner surface of the central region 102 of the outer glass plate 1 are curved in substantially the same shape so as to protrude toward the outer side of the vehicle, and the later-described intermediate film 3 is disposed between these two plates.

The thickness of the inner glass plate 2 can be made equal to that of the outer glass plate 1, but can alternatively be made smaller than the thickness of the outer glass plate 1 in order to reduce the weight of the laminated glass, for example. Specifically, in consideration of the glass strength, the thickness of the inner glass plate 2 is preferably 0.3 mm to 2.3 mm, more preferably 0.8 mm to 2.0 mm, and particularly preferably 1.0 mm to 1.6 mm. Also, the inner glass plate 2 can be formed using a material similar to that of the outer glass plate 1.

In addition, the rear glass panel is curved so as to protrude toward the outside of the vehicle as described later in detail, and the thickness in such a case is measured at two positions, namely an upper position and a lower position on a center line that extends in the top-bottom direction passing through the center of the laminated glass in the left-right direction. There is no particular restriction on the type of measurement instrument, but a thickness gauge, such as SM-112 manufactured by Teclock Corporation for example, can be used. During measurement, the laminated glass is disposed so that a curved face thereof is placed on a flat face, and measurement is performed while holding an end portion of the laminated glass using the aforementioned thickness gauge.

<3. Intermediate Film>

As shown in Fig. 2, the intermediate film 3 includes a transparent first adhesion layer 31 that is formed to be the same size as the inner glass plate 2, and is bonded to the outer glass plate 1, a transparent second adhesion layer 32 that is bonded to the inner glass plate 2, and a transparent functional layer 33 that is disposed between the adhesion layers 31 and 32.

Although the first adhesion layer 31 and the second adhesion layer 32 are not particularly limited, as long as they can be bonded to the glass plates 1 and 2, they may be formed of, for example, polyvinyl butyral resin (PVB), ethylene vinyl acetate (EVA), or the like. Generally, it is possible to control the hardness of a polyvinyl acetal resin by controlling (a) the degree of polymerization of polyvinyl alcohol that is a starting material, (b) the degree of acetalization, (c) the type of plasticizer, (d) the addition ratio of the plasticizer, and so on.

The surfaces of the first adhesion layer 31 and the second adhesion layer 32 before being bonded to the glass plates 1 and 2 may be embossed in order to be able to easily push air out when the first adhesion layer 31 and the second adhesion layer 32 are bonded to the functional layer 33 or to the glass plates 1 and 2.

Although the thicknesses of the first adhesion layer 31 and the second adhesion layer 32 are not particularly limited, the thicknesses are preferably 0.05 to 2.0 mm, more preferably 0.1 to 1.0 mm, and particularly preferably 0.1 to 0.4 mm. Note that the thicknesses of the adhesion layers 31 and 32 may be the same or different. If the adhesion layers 31 and 32 are to be embossed, the thicknesses need to be set in consideration of the embossing depth.

The total thickness of the adhesion layers 31 and 32 is preferably no less than 0.76 mm. This is to ensure the penetration resistance and the like of the windshield, specified in JIS R3211 and R3212, for example. Also, the functional layer 33 can be formed by a plurality of layered films. At this time, there may be cases where three or more of the adhesion layers 31 and 32 are used. In this case as well, the total thickness of the adhesion layers 31 and 32 is preferably no less than 0.76 mm.

A film having various functions can be used as the functional layer 33 according to the purpose. For example, a known heat shield film, heat generating film, projection film, light emitting film, antenna film, dimming film, or the like can be used. Also, a plurality of these films can be layered to form the functional layer 33.

In order to suppress an increase in temperature in the vehicle, a known infrared reflective film that reflects infrared rays, or a film configured to absorb infrared rays may be adopted as the heat shield film. Such a heat shield film is preferably disposed on the outer glass plate 1 side in the thickness direction of the intermediate film 3. That is to say, the first adhesion layer 31 is to be thinner than the second adhesion layer 32. In order to achieve a heat shielding function, in addition to forming the functional layer 33 using a heat shield film, it is possible to form at least either the first adhesion layer 31 or the second adhesion layer 32 using a heat shielding PVB, for example.

The heat generating film is used to remove fogging and to deice, and is configured to generate heat upon a voltage being applied thereto. As such a heat generating film, for example, a film in which a plurality of thin wires are supported by a substrate film, a film formed by disposing a thin transparent conductive film on a substrate, or the like can be used. The base film may be a transparent film, and the material thereof is not particularly limited. The base film may be formed of, for example, polyethylene terephthalate, polyethylene, polymethylmethacrylate, polyvinyl chloride, polyester, polyolefin, polycarbonate, polystyrene, polypropylene, nylon, or the like.

The projection film is a film onto which information is projected using light emitted from a head-up display device (hereinafter referred to as an HUD). The projection film is not particularly limited as long as it is a film that reflects light and has a refractive index different from those of the adhesion layers 31 and 32. For example, a film that can control polarization, such as a p-polarized light reflection film, a hologram film, a scattering reflection system type transparent screen, a scattering transmission type transparent screen, a scattering reflection type dimming film, a scattering transmission type dimming film, or a high reflection film for an HUD may be used. Although the size of the dimming film is not particularly limited, it is preferably larger than the area onto which information is to be projected.

The light emitting film has a built-in LED or the like, and emits light to show predetermined characters, figures, and so on.

The antenna film is, as with the heat generating film, a film formed by disposing an FM, AM, DTV, or DAB antenna on the above-described base film, for example.

While various types of film have been proposed for the dimming film, the dimming film may be one that becomes transparent or opaque by controlling the haze ratio of the film using the presence or lack of a current, for example. In other words, this is a functional film that can provide privacy. For example, known types of film such as a polymer dispersed liquid crystal (PDLC) type that uses liquid crystal, a suspended particle device (SPD) type, an electrochromic type, a thermochromic type, and the like can be used. For example, a PDLC-type dimming film can be formed by a liquid crystal layer, a pair of transparent conductive films sandwiching the liquid crystal layer, and PET films respectively disposed on the outer surfaces of the transparent conduction films. The liquid crystal layer includes liquid crystal capsules formed by enclosing a transparent polymer film and liquid crystal. Then, for example, as shown in FIG. 1, a pair of L-shaped electrodes 335 that respectively extend from the cut-out 221 formed in the inner glass plate 2 to the lower side 22 and one of the lateral sides 23 are attached to the PDLC-type liquid crystal dimming film. A pair of harnesses 338 connected to an in-vehicle power source are attached to the cut-out 231 formed in the inner glass plate 2, and the electrodes 335 exposed from the cut-out 231 are respectively connected to the harnesses 338. Then, applying a current to the liquid crystal layer via the harnesses 338, the electrodes 335, and the transparent conductive film results in dimming, and the dimming film becomes opaque, for example. Note that the form of the electrodes 335 is not particularly limited, and can be changed as appropriate. Also, the attachment positions of the harnesses 338 are not particularly limited. Accordingly, the position of the cut-out 221 formed in the inner glass plate 2 can be suitably changed depending on the attachment positions of the harnesses. Alternatively, the harnesses can also be attached to the electrodes 335 without providing a cut-out.

Note that the above-described films are examples of the functional layer 33, and the functional layer 33 is not limited to these examples.

Although not particularly limited, the thickness of the film constituting the functional layer 33 described above is preferably 0.01 mm to 2.0 mm, and more preferably 0.03 mm to 0.6 mm, for example. As described above, the upper limit of the thickness of the end face of a peripheral edge portion of the film is preferably 2.0 mm. The functional layer may be disposed extending over the entire intermediate film or on a portion of the intermediate film. For example, in a case where the functional layer is disposed on a portion of the intermediate film, when the thickness of the end face of the film is large, the functional layer 33 is smaller than the two adhesion layers 31 and 32, and therefore a step is formed in the intermediate film 3. Due to this step, air may be contained and bubbles may be formed when the intermediate film 3 is sandwiched between the two glass plates 1 and 2. Accordingly, the thickness of the functional layer 33 is preferably set as described above.

In order to prevent wrinkles from forming in the functional layer 33, it is preferable that the functional layer 33 is suitably shrunk when heated at the time of bonding, but an excessively large shrinkage ratio leads to functionality issues (warping of HUD images and reduced dimming capability), and thus the shrinkage ratio is preferably 4% or less when the functional layer 33 is heated at 130°C for 30 minutes, for example. In particular, when a dimming film is used as the functional layer 33, the shrinkage ratio is preferably no greater than 1% when heated at 130°C for 30 minutes. The thermal shrinkage ratio can be measured in the following manner. First, a film including the functional layer 33 is provided with marks at intervals of 500 mm, this film is placed on a substrate without being fixed thereto, and is held in an electric furnace kept at 130°C, for 30 minutes, and the distance between the marks is measured to calculate the thermal shrinkage ratio.

The heat shrinkage of the functional layer 33 described above is that before the windshield is manufactured. However, even after the windshield is manufactured as described below, the functional layer 33 obtained by disassembling the windshield preferably shrinks under the above-described conditions, for example.

Note that the thicknesses of the adhesion layers 31 and 32 and the functional layer 33 can be measured in the following manner, for example. First, a cross section of the windshield is magnified 175 times and displayed, using a microscope (for example, VH-5500 manufactured by KEYENCE). Thereafter, the thicknesses of the adhesion layers 31 and 32 and the functional layer 33 are visually specified, and are measured. At this time, in order to eliminate visual variations, the number of measurements is set to 5, and the average value is taken as the thicknesses of the adhesion layer 31 and 32 and the functional layer 33.

The adhesion layers 31 and 32 have the same size as the outer glass plate 1 and the inner glass plate 2, whereas the functional layer 33 may be the same size as or smaller than the adhesion layers 31 and 32. For example, in the case where the peripheral edge of the functional layer 33 is to be located inward of the peripheral edge of the inner glass plate 2, the peripheral edge of the functional layer 33 is preferably disposed 10 mm or more inward of the peripheral edge of the inner glass plate 2. This is to prevent water from entering from the edge of the intermediate film 3 when wrinkles are formed at the edge of the functional layer 33 as described later.

<3. Relationship between Curve of Glass Plates and Intermediate Film>

As described above, the rear glass panel according to the present embodiment is curved so as to protrude toward the outside of the vehicle. That is, the outer glass plate 1 and the inner glass plate 2, which have different shapes, are both curved. Examination by the inventors of the present invention found that, if the curvature radius of the portions of the outer glass plate 1 and the inner glass plate 2 sandwiching the intermediate film 3 (hereinafter referred to as "opposing region") meets the following relationship, no wrinkles will form in the intermediate film 3 including the functional layer 33 between the glass plates 1 and 2.

$$\text{Curvature index } Z = 1/Rx*1/Ry*10^{-6} \qquad (1)$$

$$\text{Curvature index } Z \leq 2.4 \qquad (2)$$

Note that Rx is the horizontal curvature radius of the opposing region and Ry is the vertical curvature radius of the opposing region.

It should be noted that Rx is preferably 200 to 200,000 mm, and Ry is 1,700 to 5,000 mm. Also, the curvature index Z is further preferably 1.3 or less, which would allow the intermediate film 3 to be arranged between the glass plates 1 and 2 free of wrinkles and likely without bubbles.

<4. Method for Manufacturing Rear Glass Panel>

The method for manufacturing the rear glass panel is not particularly limited, and a known method for manufacturing a laminated glass can be employed. First, the outer glass plate 1 is subjected to bending so as to be curved. There is no particular limitation on this method, and, for example, bending can be performed using a known press-molding method. Alternatively, the outer glass plate 1 is arranged on a mold that is then passed through a heating furnace to be heated. Accordingly, the outer glass plate 1 can be caused to curve under its own weight.

Next, the inner glass plate 2 is manufactured. First, the inner glass plate 2, which has been formed into a predetermined shape, is curved through press-molding or being subjected to bending using its own weight. Note that bending is not necessarily essential. This is because, even though the outer glass plate 1 is curved, the curvature radius of the central region 102 is large, and thus, if the inner glass plate 2 is thin, the inner glass plate 2 can be made to match the curve of the outer glass plate 1 by being adhered to the outer glass plate 1, as described later, without being independently bent.

Next, the intermediate film 3 is sandwiched between the outer glass plate 1 and the inner glass plate 2 which are then placed in a rubber bag, and pre-bonded to each other at approximately 70 to 110°C while performing suction under reduced pressure. At this time, the intermediate film 3 can be the same size as or somewhat larger than the inner glass plate 2. Other pre-bonding methods can also be used. For example, the intermediate film 3 is sandwiched between the outer glass plate 1 and the inner glass plate 2 which are then heated at 45 to 65°C in an oven. Then, the thus formed rear glass panel is pressed at 0.45 to 0.55 MPa using a roller. Next, the rear glass panel is re-heated in an oven at 80 to 105°C, and then pressed again at 0.45 to 0.55 MPa using a roller. Thus, the pre-bonding is complete.

Next, main bonding is performed. The pre-bonded laminated glass is subjected to main bonding, using an autoclave, at 8 atm to 15 atm and at 100°C to 150°C, for example. Specifically, main bonding can be performed at 14 atm at 145°C, for example. Thus, the rear glass panel according to the present embodiment is completed. Then the harnesses 338 and the like are attached as needed.

<5. Features>

With the above embodiment, the following effects can be achieved.

(i) The inner glass plate 2 is smaller than the outer glass plate 1, and thus, in other words, the glass plates 1 and 2 have different shapes despite both being curved, and thus it may be difficult to match the curves (so-called "reduced pairing") and wrinkles may form in the intermediate film 3 sandwiched between the plates. As a result, air may enter and bubbles may form, or alternatively, the edge of the inner glass plate 2 may separate from the outer glass plate 1 and form a gap. Thus, in the laminated glass according to the present embodiment, the inner glass plate 2 is disposed inward of the peripheral edge of the outer glass plate 1 while avoiding the vicinity of the peripheral edge of the largely-curved outer glass plate 1. Therefore, it is possible to suppress the formation of wrinkles in the intermediate film 3 and the entrance of air and formation of bubbles.

In particular, if Formulas (1) and (2) are met regarding the opposing region where the two glass plates 1 and 2 overlap each other, wrinkles can be kept from forming in the intermediate film 3. In other words, by making the outer glass plate 1 and the inner glass plate 2 oppose each other in a region with little curving, it is possible to suppress the formation of wrinkles in the intermediate film 3 therebetween.

(ii) The inner glass plate 2 is smaller than the outer glass plate 1, and thus the weight of the laminated glass can be reduced.

<6. Modifications>

Although one embodiment of the present invention is described above, the present invention is not limited to the above embodiment, and can be modified in various manners without departing from the spirit thereof. Note that the following modifications can be combined as appropriate.

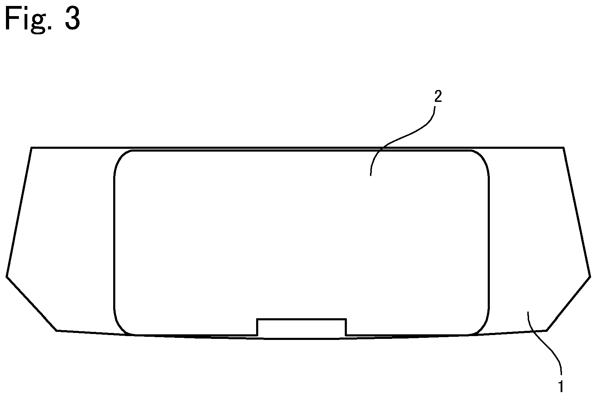

<6-1> The size and shape of the inner glass plate 2 are not particularly limited. In the above embodiment, the inner glass plate 2 is disposed inward of the peripheral edge of the outer glass plate 1, but, for example, a portion of the peripheral edge of the inner glass plate 2 may match the peripheral edge of the outer glass plate 1, as shown in FIG. 3. That is, a portion of the peripheral edge of the inner glass plate 2 may match the peripheral edge of the outer glass plate 1, provided that the curvature in the portion is small.

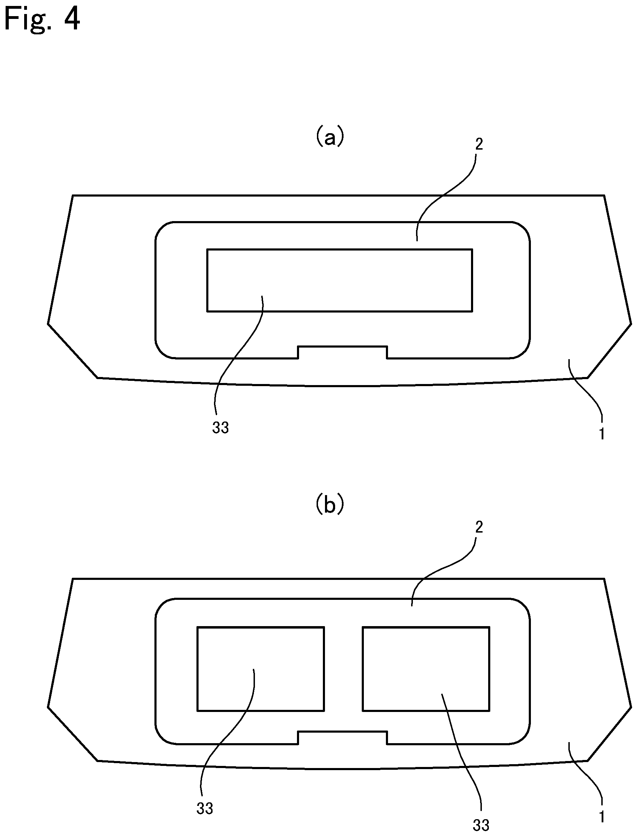

<6-2> The functional layer 33 of the intermediate film 3 does not necessarily need to extend over the entire inner glass plate 2. For example, as shown in FIG. 4(a), the functional layer 33 may be provided on a portion of the inner glass plate 2, or as shown in FIG. 4(b), the functional layer may be constituted by a plurality of sheet members that are disposed with gaps therebetween. Also, the functional layer 33 may be produced by layering a plurality of functional films. For example, it is preferable to layer a dimming film onto a heat shield film and to provide an intermediate film similar to an adhesion layer therebetween.

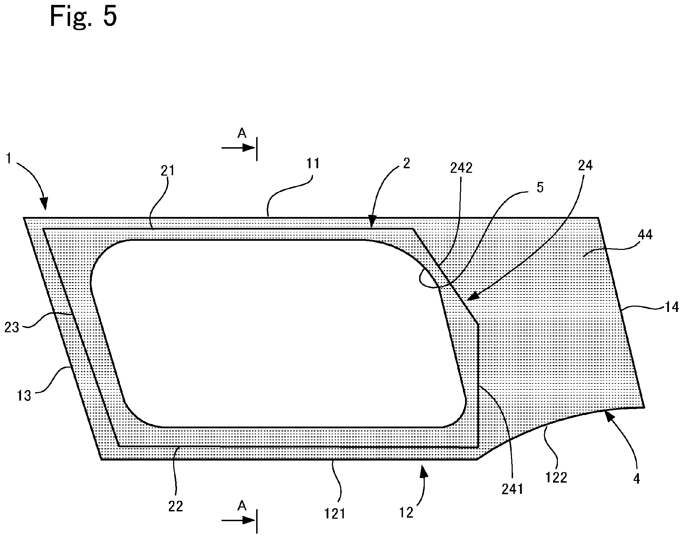

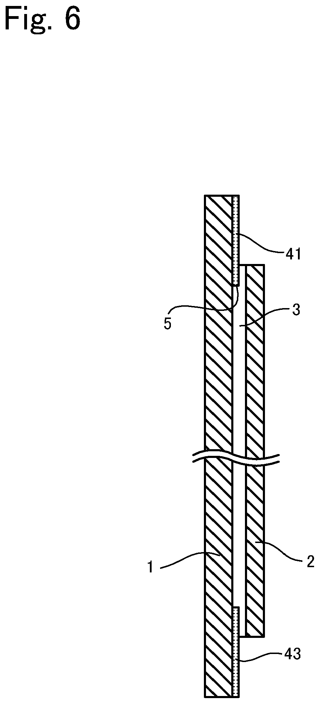

<6-3> The laminated glass of the present invention can also be applied to a rear quarter glass panel and a side glass panel in addition to the above-described rear glass panel. For example, the laminated glass may be applied to a side glass panel as shown in FIGS. 5 and 6.

As shown in FIGS. 5 and 6, the side glass panel includes the outer glass plate 1, the inner glass plate 2, and the intermediate film 3 disposed between the glass plates 1 and 2. Also, a blocking layer 4 that blocks the passage of external light is laminated onto the outer glass plate 1. The materials of the outer glass plate 1, the inner glass plate 2, and the intermediate film 3 can be the same as those in the above-described embodiment. The following is a description of these members.

The outer glass plate 1 has a horizontally elongated rectangular shape. More specifically, the outer glass plate 1 has an upper side 11 and a lower side 12 extending in the horizontal direction, a front side 13 that connects the front ends of the upper side 11 and the lower side 12, and a rear end 14 that connects the rear ends of the upper side 11 and the lower side 12. The front side 13 and the rear side 14 are inclined so as to extend somewhat toward the rear side in the downward direction. Also, the lower side 12 includes a horizontal first portion 121, and a second portion 122 that extends so as to be inclined upward in the rearward direction from the rear end of the first portion 121. Accordingly, the upper end of the rear side 14 is located at the same height as the front side 13, but the lower end of the rear side 14 is located somewhat higher than the front side 13, and the rear side 14 is formed shorter than the front side 13 overall.

Next, the blocking layer 4 will be described. The blocking layer 4 is made using a ceramic with a dark color such as black, and is laminated onto the in-vehicle side surface of the outer glass plate 1. Below, the region of the outer glass plate 1 onto which the blocking layer 4 is laminated may be referred to as the blocking region. Note that a rectangular window region 5 in which the blocking layer 4 is not laminated is formed on the upper side of the first portion 121 of the lower side 12, and the blocking layer 4 includes four regions 41 to 44 that surround the window region 5. That is, the blocking layer 4 includes, in an integrated manner, the upper region 41 that extends along the upper side 11 of the outer glass plate 1 above the window region 5, the front region 42 that extends along the front side 13 of the outer glass plate 1 on the front side of the window region 5, the lower region 43 that extends along the first portion 121 of the lower side 12 of the outer glass plate 1 below the window region 5, and the rear region 44 that is entirely laminated on the rear side of the window region 5.

The ceramic forming the blocking layer 4 can have the following compositions, for example.

[Table 1]

|  |  | First and Second Colored Ceramic Paste |
| --- | --- | --- |
| Pigment *1 | mass% | 10 |
| Resin (Cellulosic resin) | mass% | 10 |
| Organic solvent (Pine oil) | mass% | 10 |
| Glass Binder *2 | mass% | 70 |
| Viscosity | dPs | 150 |
| *1, Main ingredients: copper oxide, chromium oxide, iron oxide, and manganese oxide  *2, Main ingredients: bismuth borosilicate, zinc borosilicate |  |  |

The ceramic can be formed by means of screen printing, but can also be manufactured by transferring a transfer film for firing onto the outer glass plate 1 and firing this outer glass plate 1. In the case of employing screen printing, for example, the following conditions may be employed: polyester screen: 355 mesh, coat thickness: 20 μm, tension: 20 Nm, squeegee hardness: 80 degrees, attachment angle: 75°, and printing speed: 300 mm/s, and the ceramic can be formed after being dried in a drying oven at 150°C for 10 minutes.

In addition to laminating ceramics, the blocking layer 4 can also be formed using another material. Also, the blocking layer 4 can be formed by adhering a resin blocking film with a dark color.

The inner glass plate 2 is disposed so as to cover the window region 5, on the in-vehicle side surface of the outer glass plate 1. Also, the inner glass plate 2 includes an upper side 21, a front side 23, and a lower side 22 that respectively extend along the upper side 11, the front side 13, and the first portion 121 of the lower side 12 of the outer glass plate 1, and also a rear side 24 that connects the rear end of the upper side 21 and the rear end of the lower side 22. The rear side 24 includes a first portion 141 that extends from the vicinity of a connection portion between the first portion 121 and the second portion 122 of the lower side 12 of the outer glass plate 1, and a second portion 142 that is inclined slightly forward in the upward direction from the upper end of the first portion 141, and the upper end of the second portion 142 is connected to the rear end of the upper side 11.

More specifically, the upper side 21, the front side 23, and the lower side 22 of the inner glass plate 2 are respectively located in the upper region 41, the front region 42, and the lower region 43 of the blocking layer 4, and are located inward of a frame member 6. Also, while the rear side 24 of the inner glass plate 2 is located in the rear region 44 of the blocking layer 4, it is located near an edge of the window region 5. Accordingly, most of the rear-side region 44 is not covered by the inner glass plate 2 and is exposed.

Note that the outer glass plate 1 and the inner glass plate 2 are curved so as to protrude to the outer side of the vehicle as is the case with the rear glass panel of the above-described embodiment. Thus, by fulfilling the aforementioned Formulas (1) and (2), the intermediate film 3 can be disposed between the glass plates 1 and 2 free of wrinkles. This point also applies to the case where the laminated glass of the present invention is applied to a rear quarter glass panel.

<6-4> The blocking layer 4 provided on the side glass panel can also be provided on the rear glass panel and the rear quarter glass panel. In this case, the shape of the blocking layer is not particularly limited. For example, the blocking layer 4 can be disposed so as to cover the peripheral edge of the inner glass plate 1 in order to hide an electrode provided in the intermediate film 3. Also, an opening for an in-vehicle camera or a sensor can also be formed in the blocking layer 4.

<6-5> An inner panel made of a resin material such as a polycarbonate can be provided in place of the inner glass plate 2, for example. In doing so, the weight of the laminated glass can be reduced.

<6-6> The shapes of the outer glass plate 1 and the inner glass plate 2 in the aforementioned rear glass panel and the side glass panel are examples and can be changed as necessary.

EP 4 071 121 A1

Examples

The following describes examples of the present invention. Note that the present invention is not limited to the following embodiments.

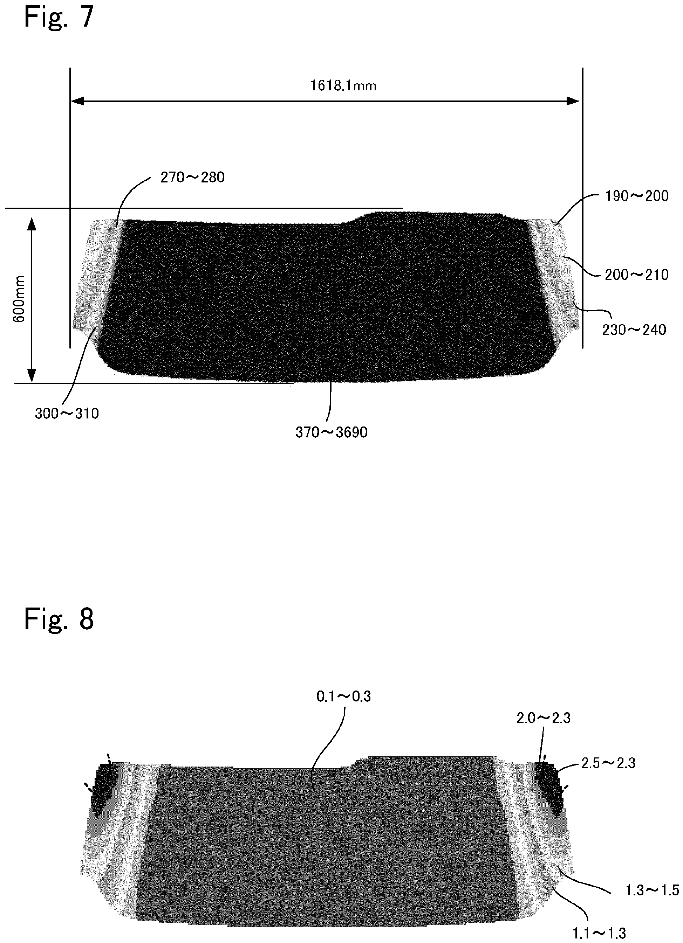

An outer glass plate (2 mm thick) shown in FIG. 7 was prepared. The values shown in FIG. 7 indicate Rx, which is a horizontal curvature radius of the in-vehicle side surface of the outer glass plate. Accordingly, this outer glass plate is configured by combining a plurality of curvature radii. The unit of the values in FIG. 7 is mm, and the curvature radii largely change with bilateral symmetry. Also, FIG. 8 shows the distribution of the curvature index Z of the in-vehicle side surface of the outer glass plate shown in FIG. 7.

An examination was made regarding whether or not wrinkles formed when an intermediate film with a thickness of 0.76 mm and a thermal shrinkage ratio of 1% is adhered to in-vehicle side surface of this outer glass plate and sandwiched by the outer glass plate and the inner glass plate (1.5 mm thick). The results indicated that no wrinkles were formed in the region where the curvature index Z was 2.4 or less. Also, when the curvature radii Rx and Ry were examined, it was found that wrinkles formed in a region where Rx was 190 mm, and no wrinkles formed in a region where Rx was 200 mm. Accordingly, Rx is preferably 200 mm or more. Similarly, it was found that wrinkles formed in a region where Ry was 1660 mm, and no wrinkles formed in a region where Ry was 1787 mm. Accordingly, it was found that it is preferable that Ry is 1700 mm or more.

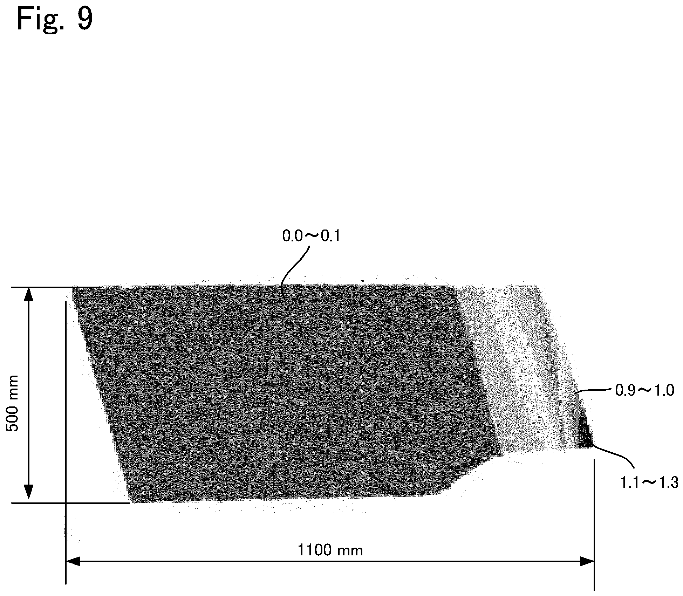

FIG. 9 shows a distribution of curvature indexes of an outer glass plate of a side glass panel. In this example, the curvature indexes in all regions were 1.3 or less. Also, an intermediate film similar to that described above was adhered to the outer glass plate, but no wrinkles formed in the intermediate film. Note that it is conceivable that the formation of wrinkles in an intermediate film is easily influenced by the thermal shrinkage ratio, but in tests where glass plates such as those described above were used, similar effects were obtained even in intermediate films with a thermal shrinkage ratio of approximately 4%.

List of Reference Numerals

    10    Laminated Glass
    1     Outer Glass Plate (First Glass Plate)
    2     Inner Glass Plate (Second Glass Plate)
    3     Intermediate Film
    31    First Adhesion Layer
    32    Second Adhesion Layer
    33    Functional Layer
    4     Blocking Layer

**Claims**

1.  An automobile laminated glass comprising:

    a curved outer glass plate;
    a curved inner panel that is smaller than the outer glass plate and is disposed opposing the outer glass plate; and
    an intermediate film that includes a functional layer and is disposed between the outer glass plate and the inner panel,
    wherein at least a portion of the inner panel is located inward of a peripheral edge of the outer glass plate.

2.  The automobile laminated glass according to claim 1,
    wherein when a horizontal curvature radius of an opposing region of the outer glass plate where the outer glass plate opposes the inner glass plate is defined as Rx (mm), and a vertical curvature radius of the outer glass plate is defined as Ry (mm), and $1/Rx*1/Ry*10^{-6}$ is defined as a curvature index, the curvature index is 2.4 or less.

3.  The automobile laminated glass according to claim 2,
    wherein the curvature index in the opposing region is 1.3 or less.

4.  The automobile laminated glass according to claim 2 or 3,

wherein Rx is 200 to 200,000 mm, and
Ry is 1,700 to 5,000 mm.

5. The automobile laminated glass according to any of claims 1 to 4, including at least one protruding portion curved to an outer side of a vehicle when the automobile laminated glass is attached to the vehicle.

6. The automobile laminated glass according to any of claims 1 to 5,
wherein the functional layer is a dimming film.

7. The automobile laminated glass according to claim 6,
wherein the dimming film is a PDLC-type or SPD-type film.

8. The automobile laminated glass according to claim 6 or 7,
wherein a terminal for applying a voltage to the dimming film is disposed in a lower end portion of the inner glass plate.

9. The automobile laminated glass according to any of claims 1 to 8,

wherein the intermediate film is formed by a plurality of sheet members, and
the plurality of sheet members are arranged spaced apart from each other.

10. The automobile laminated glass according to any of claims 1 to 9,
wherein the inner panel is formed by a glass plate.

11. The automobile laminated glass according to any of claims 1 to 10,

wherein the outer glass plate includes a window region that allows passage of light from outside a vehicle, and
a blocking region in which a blocking layer is laminated surrounding the window region so as to block the passage of light from outside the vehicle, and
the inner panel is attached so as to cover the window region.

12. The automated laminated glass according to any of claims 1 to 11,
wherein the automated laminated glass is a rear glass panel, a rear quarter glass panel, or a side glass panel.

13. The automated laminated glass according to any of claims 1 to 12,

wherein the outer glass plate has a thickness of 1.6 mm to 4 mm, and
the inner panel has a thickness of 0.3 to 2.3 mm.

14. The automobile laminated glass according to any of claims 1 to 13,

wherein the intermediate film includes a pair of the adhesion layers, and
the functional layer is disposed between the pair of adhesion layers.

Fig. 1

Fig. 2

Fig. 3

Fig. 4

(a)

(b)

Fig. 5

# Fig. 6

## Fig. 7

1618.1mm

270～280

190～200

600mm

200～210

230～240

300～310

370～3690

## Fig. 8

0.1～0.3

2.0～2.3

2.5～2.3

1.3～1.5

1.1～1.3

Fig. 9

0.0~0.1

500 mm

0.9~1.0

1.1~1.3

1100 mm

<table>
<tr><td colspan="2" align="center">**INTERNATIONAL SEARCH REPORT**</td><td>International application No.<br><br>PCT/JP2020/044222</td></tr>
</table>

**A. CLASSIFICATION OF SUBJECT MATTER**
Int.Cl. C03C27/12(2006.01)i, B32B17/10(2006.01)i, B60J1/00(2006.01)i
FI: C03C27/12R, C03C27/12N, B32B17/10, B60J1/00J

According to International Patent Classification (IPC) or to both national classification and IPC

**B. FIELDS SEARCHED**

Minimum documentation searched (classification system followed by classification symbols)
Int.Cl. C03C27/12, B32B17/10, B60J1/00

Documentation searched other than minimum documentation to the extent that such documents are included in the fields searched
Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | WO 2019/026770 A1 (AGC INC.) 07 February 2019 (2019-02-07), paragraphs [0001], [0002], [0012], [0036], [0052], [0054]-[0058], tables 1, 2, claims 1, 6, 7, 13, 14, fig. 2, 3 | 1, 5, 10, 12, 13<br>2-4, 6-9, 11, 14 |
| Y<br>A | WO 2018/181180 A1 (NIPPON SHEET GLASS CO., LTD.) 04 October 2018 (2018-10-04), paragraphs [0001], [0039], [0040], [0058], [0079], fig. 2 | 2-4, 6-9, 11, 14<br>1, 5, 10, 12, 13 |
| Y<br>A | WO 2019/156030 A1 (AGC INC.) 15 August 2019 (2019-08-15), paragraphs [0001]-[0003], [0015], [0017]-[0024], [0026], [0034], [0044], fig. 1, 2(a), 2(b), claims 1, 4, 12, 13, 15 | 2-4, 6-9, 11, 14<br>1, 5, 10, 12, 13 |
| A | WO 2016/143582 A1 (NIPPON SHEET GLASS CO., LTD.) 15 September 2016 (2016-09-15), entire text | 1-14 |

☒ Further documents are listed in the continuation of Box C.  ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>22 January 2021 | Date of mailing of the international search report<br>02 February 2021 |
|---|---|
| Name and mailing address of the ISA/<br>Japan Patent Office<br>3-4-3, Kasumigaseki, Chiyoda-ku,<br>Tokyo 100-8915, Japan | Authorized officer<br><br><br>Telephone No. |

Form PCT/ISA/210 (second sheet) (January 2015)

**INTERNATIONAL SEARCH REPORT**

| International application No. |
| --- |
| PCT/JP2020/044222 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | WO 2015/122507 A1 (NIPPON SHEET GLASS CO., LTD.) 20 August 2015 (2015-08-20), entire text | 1-14 |
| A | JP 11-139157 A (TOYOTA MOTOR CORPORATION) 25 May 1999 (1999-05-25), entire text | 1-14 |

Form PCT/ISA/210 (second sheet) (January 2015)

**INTERNATIONAL SEARCH REPORT**
Information on patent family members

International application No.

PCT/JP2020/044222

| | | | |
|---|---|---|---|
| WO 2019/026770 A1 | 07 February 2019 | US 2020/0130326 A1<br>paragraphs [0001], [0002],<br>[0014]–[0018], [0043], [0065],<br>[0067]–[0069], tables 1, 2,<br>fig. 2, 3, claims 1, 6, 7, 13, 14 | |
| WO 2018/181180 A1 | 04 October 2018 | US 2020/0018954 A1<br>paragraphs [0001], [0111], [0112],<br>[0136], [0165], fig. 2<br>JP 2018-162044 A<br>CN 110475684 A<br>KR 10-2019-0127757 A<br>EP 3604005 A1 | |
| WO 2019/156030 A1 | 15 August 2019 | (Family: none) | |
| WO 2016/143582 A1 | 15 September 2016 | JP 2016-168996 A<br>whole document | |
| WO 2015/122507 A1 | 20 August 2015 | US 2017/0050415 A1<br>whole document<br>EP 3106443 A1<br>CN 105980325 A<br>JP 2015-151308 A | |
| JP 11-139157 A | 25 May 1999 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017065966 A